# EUROPEAN PATENT APPLICATION

(11) **EP 1 371 689 A1**
(43) Date of publication of application: **17.12.2003**
(21) Application number: 02013480.5
(22) Date of filing: 14.06.2002
(51) Int. Cl.: C09D 4/00, C08G 61/12

(54) **Storage stable curable coating compositions**

(71) Applicant: DAINIPPON INK AND CHEMICALS, INC., Itabashi-ku Tokyo (JP)
(72) Inventor: Lachowicz, Artur, Dr., 13403 Berlin (DE); Gaudl, Kai-Uwe, Dr., 13403 Berlin (DE); Takahashi, Masaharu, 13403 Berlin (DE); Yatsugi, Kenichi, Dr., 13403 Berlin (DE); Grahe, Gerwald F., Dr., 13403 Berlin (DE)
(74) Representative: Albrecht, Thomas, Dr.

(57) **Abstract**

The invention relates to a curable coating composition, which can be cured at low temperatures and which exhibits at the same time good storage stability at room temperature, comprising
(i) as component (A), at least one compound having at least two activated unsaturated groups,
(ii) as component (B), at least one compound having at least two activated hydrogen atoms,
(iii) as component (C), at least one tertiary organic phosphine,
(iv) as component (D), at least one carboxylic acid.

## Description

This invention relates to curable coating compositions comprising compounds containing activated unsaturated groups, compounds containing activated hydrogen atoms, tertiary organic phosphines and carboxylic acids. The compositions can be cured at low temperatures and show at the same time good storage stability at room temperature.

Coatings compositions containing activated unsaturated groups and activated hydrogen atoms are known, in general, from several references.
An early example is the German specification DE-PS 835809, which discloses a process for production of products derived from compounds containing activated hydrogens, including activated methylene groups, and activated double bonds. U.S. specification No. 2,759,913 discloses a composition of the above type, which may be prepared at ambient and elevated temperatures. More specifically, the reference generally describes the production of polymeric materials prepared from compounds containing at least two activated ethylenic double bonds and components containing at least two activated hydrogen atoms. Active hydrogen atoms include again those present in activated methylene groups. Activated methylene groups are such which have electron withdrawing groups in α-position, such as carbonyl- or ester groups, as for example in acetoacetates.
U.S. specification No. 4,602,061 describes a similar composition except that the component containing activated methylene groups is specifically described as an oligomeric or polymeric ester, containing malonate groups.
U.S. specification No. 4,408,018 discloses acrylic polymers into which acetoacetate groups have been introduced and which may be crosslinked with ethylenically unsaturated esters in the presence of strong alkaline catalysts via the Michael addition reaction. The introduction of the acetoacetate group is effected via the acetoacetic esters of hydroxyalkylacrylates and subsequent copolymerization with further copolymerizable monomers, or by reacting polymers containing hydroxyl groups with the precursor of the acetoacetic ester component, the diketene. Acrylated polyester, containing more than two acrylate groups, may then be crosslinked with the polymers containing the acetoacetate groups.

U.S. specification No. 4,871,822 discloses an extension of the prior art by using various catalysts to improve handling and properties of reaction products of ethylenically unsaturated compounds with compounds containing active hydrogen atoms. The components containing active hydrogens include such as activated methylene groups, as for example such in acetoacetates and malonates.
In U.S. specification No. 5,017,649, systems are described, containing activated hydrogen atoms, present in ß-dicarbonyl compounds, and activated unsaturated groups. The curing is catalyzed by strong basic amines having amidine structure, such as 1,8-diazabicyclo(5.4.0)undec-7-ene (DBU), and which enable hardening of coating compositions at temperatures even below room temperature.
U.S. specification No. 5,496,896 reveals curable compositions based on the Michael addition, which may also be cured at room temperature and which are useful as automobile refinishing.

All of the aforementioned specifications describe products useful as coating materials. The basis for this application is the "so called" Michael addition, which enables the crosslinking of resins under mild conditions (curing at low temperatures), without any splitting product. Therefore, this reaction is considered as a replacement for the isocyanate-alcohol reaction in such cases where isocyanates are difficult to use, since they may exhibit a considerable health hazard for the environment.

However, a drawback of the Michael addition is, similar to the isocyanate-alcohol system, that due to the high reactivity, the pot-life, or in other words, the storage stability and the processing time of the curable mixtures is limited. In U.S. specification No. 4,408,018, pot lives from 11 minutes to 72 hours are reported (column 4, table III), in U.S. specification No. 4,871,822 pot lives between 5 minutes and 12 hours are described (column 10, line 36-38), in U.S. specification No. 5,017,649 pot lives between 6 and 12 hours are disclosed (column 6, line 11-14). Therefore, in general, only so called "2-component systems" are feasible, whereas the catalyst is added just before the application of the coating composition or the reactive components are stored separately and mixed just before the application of the coating. However, the utterly desired so called "1-component" ambient temperature curable coating compositions, which are ready to use, but which are at the same time long term storage stable (several months), were not achieved.

Furthermore, in addition of the lack of storage stability, the formulation of highly reactive "2-component systems" just prior to the application of the coating, is a demanding and tricky process, as the crosslinking may already start during blending, but prior to the application of the coating, which is absolutely not desired by the "end user".

Another drawback is that Michael addition requires a strong basic catalyst, as outlined in U.S. specification No. 4,408,018 (column 2, line 7-18), such as potassium hydroxide, organic ammonium hydroxides or sodium methoxide. These catalysts are known to impart cloudiness to the lacquer, due to bad solubility as well as considerable yellowing, as known, for example from U.S. specification 4,871,822 (column 1, line 67 through column 2, line 3). Strong alkaline amine catalysts, as for example 1,8-diazabicyclo(5.4.0)undec-7-ene, 1,5-diazabicyclo(4.3.0)non-5-ene or tetramethylguanidine, which are known from the previously mentioned U.S. specification No. 5,017,649, are better soluble in organic coatings, but they also reduce the hydrolytic stability of coatings. This is known from [Journal of Coatings Technology, Vol. 61, No. 770, March 1989, page 89]. The sensitivity of polyesters towards hydrolysis in presence of strong alkaline catalyst was also described in the product information bulletin from Eastman Kodak company: "The Utility of Acetoacetoxyethyl Methacrylate (AAEM) in Thermoset Coatings" (page 14, last section: "Michael addition").

Therefore, the object of the present invention was to provide curable coating compositions, which can be crosslinked at low temperatures or room temperature but which are, on the other hand, also storage stable at room temperature, and which do not suffer from the drawbacks of strong basic catalysts, which may impart yellowing, cloudiness and hydrolysis instability to the coating.

According to the invention, the object is achieved by the curable coating compositions of this invention comprising
(i) as component (A), at least one compound having at least two activated unsaturated groups,
(ii) as component (B), at least one compound having at least two activated hydrogen atoms,
(iii) as component (C), at least one tertiary organic phosphine,
(iv) as component (D), at least one carboxylic acid.

The products of this invention are useful as coating materials or as materials to make coatings as for example as binder components in varnishes, adhesives, paints and printing inks.

The component (A) represents compounds containing activated unsaturated groups. As suitable compounds may generally be mentioned ethylenically unsaturated compounds, in which the carbon-carbon double bond is activated by a carbonyl group in the α-position. Especially suitable are oligomeric and polymeric esters of acrylic acid, having at least two acrylate groups. They are commercially available from several vendors under such synonyms as polyesteracrylates, urethaneacrylates and epoxyacrylates. Suitable are also monomeric acrylates which contain at least two acrylate groups and which act as crosslinker between compounds containing activated methylene groups. Examples for such compounds are 1,4-butandiol diacrylate, 1,6-hexandiol diacrylate, dipropylene glycol diacrylate, neopentylglycol diacrylate, ethoxylated neopentylglycol diacrylate, propoxylated neopentylglycol diacrylate, tripropylene glycol diacrylate, bisphenol-A diacrylate, ethoxylated bisphenol-A diacrylate, poly(ethylene)glycol diacrylate, trimethylolpropane triacrylate, ethoxylated trimethylolpropane triacrylate, propoxylated trimethylolpropane triacrylate, propoxylated glycerol triacrylate, tris(2-hydroxyethyl)isocyanurate triacrylate, pentaerythritol triacrylate, ethoxylated pentaerythritol triacrylate, pentaerythritol tetraacrylate, ethoxylated pentaerythritol tetraacrylate, ditrimethylolpropane tetraacrylate, dipentaerythritol pentaacrylate, dipentaerythritol hexaacrylate or mixture thereof. Instead of acrylates also methacrylates, esters of crotonic acid and cinnamic acid may be used as well. These esters may optionally contain hydroxyl groups. Furthermore, suitable compounds for the component (A) also include polyesters based on maleic-, fumaric- and / or itaconic acid and / or maleic- and / or itaconic anhydride. Representative examples of compounds of component (A), cited by the prior art, are described in the U.S. specifications No. 2,759,913 (column 6, line 35 through column 7, line 45), 4,871,822 (column 2, line 14 through column 4, line 14), 4,602,061 (column 3, line 14-55) and 4,408,018 (column 2, lines 19-68).
As explained before the compounds of component (A) containing activated unsaturated groups, are generally known to those skilled in the art, and need no further description.

The component (B) represents compounds which contain activated hydrogen atoms. Activated hydrogen atoms are such, which are bound to a carbon atom, which itself is located in α-position to electron withdrawing groups. Preferred are such activated hydrogen atoms, which are part of an activated methylene group, having two carbonyl groups in α-position. Examples for such materials are acetoacetate and malonate oligomers or polymers, obtained by transesterification of acetoacetic acid alkylesters or malonate dialkylesters with oligomeric or polymeric polyols and acetoacetate group-containing oligomers and polymers obtained by copolymerization of 2-acetoacetoxyethyl methacrylate (AAEM). Various examples of such compounds are further described in the specifications of the prior art as for example in U.S. specification No. 4,871,822 (column 4, line 15 through column 5, line 45), where the compounds contain a methylene and / or monosubstituted methylene group in the α-position to two activating groups such as, for example, carbonyl-, cyano-, or nitrogroups. Preferred of these are compounds containing a methylene group in the α-position to two carbonyl groups, such as malonate and / or acetoacetate group-containing compounds. As preferred examples of malonate group-containing compounds may be mentioned malonic acid esters as disclosed in previously mentioned U.S. specification No.4,602,061 (column 2, line 10 through column 3 line 13). Preferred of these are the oligomeric and/or polymeric malonate group-containing compounds such as for example, polyurethanes, polyesters, polyacrylates, epoxy resins, polyamides and polyvinyl resins containing malonate groups in the main chain, pendant or both.
As examples of compounds containing acetoacetate groups may be mentioned acetoacetic esters as disclosed in U.S. specification No. 2,759,913 (column 8, lines 53-54), diacetoacetate compounds as disclosed in U.S. specification No. 4,217,396 (column 2, line 65 through column 3, line 27), and acetoacetate group-containing oligomeric and polymeric compounds as disclosed in U.S. specification No. 4,408,018 (column 1, line 51 through column 2, line 6). Preferred of these are the oligomeric and/or polymeric acetoacetate group-containing compounds. Especially preferred for the present invention are compounds containing acetoacetate groups containing at least 2 acetoacetate groups. It is also especially preferred that such acetoacetate group-containing compounds should have an average molecular weight in the range of from about 250 to 50000. Compounds containing both malonate and acetoacetate groups in the same molecule are also suitable and can be obtained, for example, by a Michael addition between a malonate functional polyester and an acetoacetate functional acrylic compound (e.g., acetoacetoxyethyl acrylate). Additionally, simple mixtures of malonate and acetoacetate group-containing compounds are suitable as well. Low molecular weight alkyl acetoacetates and malonates, such as ethyl acetoacetate and dimethyl malonate may also be used as reactive diluents.
The compounds of component (B), which include the aforementioned and other malonate and / or acetoacetate group-containing compounds, and their methods of production, are generally known to those skilled in the art and need no further explanation.
The component (C) represents tertiary organic phosphines. Such compounds may be aliphatic, cycloaliphatic, aromatic or of mixed character.
Suitable examples include tributylphosphine, triisobutylphosphine, tri-tertiary-butylphosphine, tris(2,4,4-trimethylpentyl)phosphine, tricyclopentylphosphine, tricyclohexylphosphine, tri-n-octylphosphine (TOP), tri-n-dodecylphosphine, trivinylphosphine, tribenzylphosphine, dimethylphenylphosphine, cyclohexyldiphenylphosphine, dicyclohexylphenylphosphine, 1,2-bis(diphenylphosphino)ethane, 1,3-bis(diphenylphosphino)propane, 1,4-bis(diphenylphosphino)butane, triphenylphosphine (TPP), tertiary arylphosphines, activated by the electron donating groups -OR oder -NR₂ (R = H, C₁-C₁₂-alkyl, C₁-C₁₂-aryl) as for example diphenyl(2-methoxphenyl)phosphine, tris(4-methoxyphenyl) phosphine, tris(2,6-dimethoxyphenyl)phosphine, tris(4-dimethylaminophenyl) phosphine, tertiary alkylphosphines, containing phosphorous bound hetero atoms as for example hexamethylene triaminophosphine and hexaethylene triaminophosphine.

Preferred are trialkylphosphines and phosphines containing both aliphatic and aromatic moieties. The aforementioned phosphines are commercially available or may be prepared according to standard methods of Organic chemistry such as Grignard reaction of alkylhalogenides with phosphorous trichloride or catalytic addition of alkenes to phosphane.
The component (D) represents compounds containing carboxylic acid groups. Various carboxylic acids were tested. In general, any carboxylic acid present in the curable coating compositions of this invention extends the pot-live of the mixture considerably and make them storage stable at ambient temperature. Among those, some carboxylic acids are preferred for the curing at elevated temperatures above 100°C, such as formic acid, acetic acid, propionic acid, pentanoic acid, hexanoic acid, malonic acid, cyanoacetic acid, nitroacetic acid, phenylacetic acid, α-oxoacetic acid, maleic acid, succinic acid and glyoxylic acid. Especially suitable for curing at low temperatures below 100°C or even at room temperature are formic acid, acetic acid or propionic acid.

The curable coating compositions of this invention are prepared by blending, mixing or dissolving the aforedescribed components (A)-(D) at room temperature. Important is the sequence of the addition of the components (A)-(D). In general, component (D) must be present in a system, which is able to react (both components A +B are present), before the addition of (C).

Thus, the invention relates to a method for the preparation of a curable coating composition according to claims 1-8, wherein the components (A), (B), (C) and (D) are mixed in an arbitrary order with the proviso that component (C) is added after the addition of component (D).
In a further embodiment, the mixture of the components (C) und (D) is prepared separately and the said mixture is then mixed with components (A) and (B) in an arbitrary order.
After the addition of each component, the mixture is thoroughly stirred in order to finely disperse or dissolve the components in each other, before the addition of the next component is processed. The addition of component (C) to an solution of (A+B), before adding component (D), may result in an immediate increase in viscosity and formation of gel particles, so that the curable coating composition can no longer be applied. The amount of component (C) is 0.1-10 weight%, preferred 0.2-2.0 weight% of the total weight of the curable coating composition. The amount of component (D) depends on the amount of component (C). The equivalent of the carboxylic acid groups of component (D) should exceed the equivalent of the phosphine compounds of component (C). For good long term storage stability the carboxylic acid group equivalent may be applied in an excess of at least 50%. The equivalent ratio of activated unsaturated groups from component (A) and activated hydrogen atoms from component (B) is idealized 1:1, since one active hydrogen atom is able to react with one acrylate groups. Suitable ratios of activated unsaturated groups from component (A) and the activated hydrogen atoms from component (B), which give crosslinked products, are from 4:1 to 1:4, preferred 1.5:1 to 0.75:1.
The coating compositions of this invention are storage stable at ambient temperature but can also be cured over a wide range of temperatures even at ambient temperature.
The crosslinking can be done at elevated temperatures in the range of 60-200°C, especially interesting is the curing in the range of 80-120°C. At these moderate temperatures, the crosslinking may proceed unexpectedly fast. Often, within a baking time of 10-15 minutes, the coatings reached their maximum hardness and solvent resistance. Such curing systems are particularly suitable for the coating of temperature sensitive substrates as for example wood and plastics, well as coating compositions for automotive repair finishing.
Furthermore, the curable coating compositions of this invention do not contain strong basic catalysts such as potassium hydroxide, organic ammonium hydroxides, sodium methoxide, 1,8-diazabicyclo(5.4.0)undec-7-ene, 1,5-diazabicyclo(4.3.0)non-5-ene or tetramethylguanidine, which are known to impart yellowing, cloudiness and hydrolytic instability into the lacquer.

The curable coating compositions of this invention may be applied as coatings to various kinds of substrates, for example to substrates of an organic or inorganic nature, such as plastics, glass, ceramics, building materials, such as concrete, fiberboards or artificial stone, wood, wood fiber materials, textiles of natural or synthetic origin and metal. The coatings may also be employed for household articles and equipment, for example refrigeration equipment, washing machines, electrical equipment, windows, doors, furniture or the like. Coating application may be carried out by brushing, spraying, rolling, dipping or electrostatic means. The curable coating compositions of this invention may also contain the customary additives, such as, pigments, fillers, dyestuffs, plastizers, stabilizers, leveling agents, neutralizing substances, such as tertiary amines, and catalysts, and these can be used in the customary amounts. These substances may be added to the individual components and / or to the total mixture. Examples of dyestuffs or pigments, which may be of inorganic or organic nature, are: titanium dioxide, graphite, carbon black, zinc chromate, strontium chromate, barium chromate, lead chromate, lead cyanamide, lead silicochromate, calcium molybdate, manganese phosphate, zinc oxide, cadmium sulfide, chromic oxide, zinc sulfide, nickel titanium yellow, chromium titanium yellow, red oxide of iron, black oxide of iron, ultramarine blue, phthalocyanine complexes, naphthol red or the like. Examples of suitable fillers are powdered quartz, powdered asbestos, talc, mica, kaolin, chalk, barium sulfate, various grades of silica, silicates or the like. The customary solvents are for example aliphatic and aromatic hydrocarbons, ethers, esters, glycol ethers and esters thereof, ketones, chlorinated hydrocarbons, terpene derivatives, such as toluene or xylene, ethyl acetate, butyl acetate, ethylene glycol monoethyl ether-acetate, ethylene glycol monobutyl ether-acetate, ethylene glycol dimethyl ether, diethylene glycol dimethyl ether, cyclohexanone, methyl ethyl ketone, acetone, isophorone or mixtures thereof. Preferred are such solvents, which contain activated unsaturated double bonds and / or activated hydrogen atoms, serving as reactive diluents such as trimethylolpropane triacrylate, tripropylene glycol diacrylate, ethyl acetoacetate or dimethyl malonate.

This invention will be further explained by a consideration of the following non-limiting examples which are intended to be purely exemplary of this invention.

### Examples:

### Example 1

100 ml of toluene was sparged with nitrogen and heated 90°C. Then, a solution of 60.0g of methyl methacrylate, 20.0g of butyl acrylate, 20.0g of 2-acetoacetoxyethyl methacrylate and 1.50g of azobisisobutyronitril (AIBN) was dropped into the hot toluene within 3 hours. Then, the mixture was stirred for another three hours. After cooling to room-temperature a viscous resin was obtained containing a copolymer having pendant acetoacetate groups, which represents component B, (molecular number average: Mn = 16000, glass transition temperature: Tg = 38°C). To that resin, 30.0g of trimethylolpropane triacrylate (component A) was added and dissolved followed by 0.7g of formic acid (component D) and 2.0g of trioctylphosphine (component C).The mixture was adjusted with additional toluene until a coating viscosity of 200 mPas @ 25°C was reached. The final curable coating composition was applied on top of aluminum specimen in coating thickness of approx. 40 µm and cured under two different conditions at 75°C for 30 minutes or at 120°C for 30 minutes.

| Solvent resistance / Pencil hardness (75°C / 30') | Solvent resistance / Pencil hardness (120°C / 30') | Storage Stability @ RT |
|---|---|---|
| 50 | >200 | > 6 months |
| 2H | 3H | |
| ¹Solvent resistance of the hardened coating, tested by repeated rubbing of the film surface with a woodpulp cloth impregnated with methyl ethyl ketone (MEK). The number of rubbings that still did not produce any visible damage to the coating was measured. ²Pencil hardness (measured according to the ASTM procedure D3363) | | |

### Example 2-10

General procedure: 5.00 g of trimethylolpropane triacrylate (component A) was mixed with 5.00g of the diacetoacetate (component B), 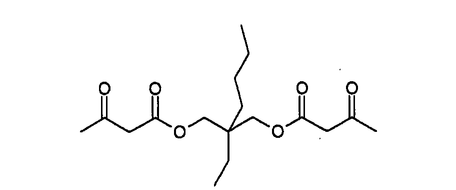 which was prepared by transesterification of ethyl acetoacetate and 2-butyl-2-ethyl-1,3-propane diol. To that mixture, 1.0 mmol of a carboxylic acid (component D, see table 1 below, column 3) was added and completely dissolved. Then, 0.5 mmol of a phosphine compound (component C, see table 1 below, column 2) was added dropwise under stirring. The final curable coating composition was applied on top of an aluminum specimen in a coating thickness of approx. 40 µm and cured at under three different conditions: at room temperature for 7 days or at 80°C for 30 minutes or at 140°C for 20 minutes. The solvent resistance and the pencil hardness of the cured coatings as well as the storage stability of the curable coating compositions is shown in the table 1 below in column 4-7.

**Table 1:**

| Expl. | Component (C) | Component (D) | ¹Solv. resist. / ²Pencil hard. (25°C / 7d) | ¹Solv. resist. / ²Pencil hard. (80°C / 30') | ¹Solv. resist. / ²Pencil hard. (140°C / 20') | Storage Stability @ RT |
|---|---|---|---|---|---|---|
| 2 | TOP | Formic acid | 25 H | 30 2H | >50 2H | >6 months |
| 3 | TOP | Acetic acid | 15 H | 30 2H | 50 2H | 4 months |
| 4 | TOP | Malonic acid | no cure | 3 H | 10 2H | >6 months |
| 5 | TOP | Formic acid | 30 H | 45 2H | >50 2H | >6 months |
| 6 | TOP | Acetic acid | 15 6B | 40 H | > 50 2H | 3 months |
| 7 | TCHP | Malonic acid | no cure | 2 HB | 8 2H | 6 months |
| 8 | TCHP | Formic acid | 30 H | 40 2H | > 50 2H | > 6 months |
| 9 | DCHPP | Acetic acid | 15 H | 35 2H | > 50 2H | 3 months |
| 10 | TOP | Glyoxylic acid | no cure | 39 H | >50 H | 2 months |

| | | | | | | |
|---|---|---|---|---|---|---|
| ¹Solvent resistance of the hardened coating, tested by repeated rubbing of the film surface with a woodpulp cloth impregnated with methyl ethyl ketone (MEK). The number of rubbings that still did not produce any visible damage to the coating was measured. | | | | | | |
| ²Pencil hardness (measured according to the ASTM procedure D3363) TOP = trioctylphosphine TCHP = tricyclohexylphosphine DCHPP = dicyclohexylphenylphosphine | | | | | | |

### Example 11-14

General procedure: 5.00 g of trimethylolpropane triacrylate (component A) was mixed with 7.50g of the oligomeric malonate depicted below (component B, molecular weight ∼1000), 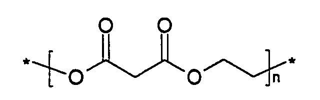 which was prepared by transesterification of dimethyl malonate and ethylene glycol. To that mixture, 1.00 mmol of a carboxylic acid (component D, see table 2 below, column 3) was added and completely dissolved. Then, 0.50 mmol trioctyl phosphine was added dropwise under stirring. The final curable coating composition was applied on top of aluminum specimen in a coating thickness of approx. 40 µm and cured under two different conditions: at 100°C for 30 minutes or at 145°C for 20 minutes. The solvent resistance and the pencil hardness of the cured coatings as well as the storage stability of the curable coating compositions is shown in the table 2 below in column 4-6.

**Table 2:**

| Example | Component (C) | Component (D) | ¹Solv. resist. / ²Pencil hard. (100°C / 30') | ¹Solv. resist. / ²Pencil hard. (145°C / 20') | Storage Stability @ RT |
|---|---|---|---|---|---|
| 11 | TOP | Formic acid | 25 H-B | >50 H-2H | 6 months |
| 12 | TOP | Acetic acid | 20 3B | 40 H | 4 months |
| 13 | TOP | Malonic acid | 3 3B | 50 H-2H | 6 months |
| 14 | TOP | Glyoxylic acid | 20 H | ∼50 2H | 3 months |

| | | | | | |
|---|---|---|---|---|---|
| ¹Solvent resistance of the hardened coating, tested by repeated rubbing of the film surface with a woodpulp cloth impregnated with methyl ethyl ketone (MEK). The number of rubbings that still did not produce any visible damage to the coating was measured. | | | | | |
| ²Pencil hardness (measured according to the ASTM procedure D3363) | | | | | |

## Claims

1. A curable coating composition comprising:
(i) as component (A), at least one compound having at least two activated unsaturated groups,
(ii) as component (B), at least one compound having at least two activated hydrogen atoms,
(iii) as component (C), at least one tertiary organic phosphine,
(iv) as component (D), at least one carboxylic acid.

2. A curable coating composition according to claim 1, wherein the molar ratio of activated unsaturated groups of component (A), and activated hydrogen atoms of component (B) is in a range from 4:1 to 1:4.

3. A curable coating composition according to claim 1, wherein component (C) is present in an amount of 0.1-10 weight%.

4. A curable coating composition according to claim 1, wherein component (D) is present in an amount of 0.05-10 weight%.

5. A curable coating composition according to claim 1, wherein component (D) is selected from the group consisting of formic acid, acetic acid, propionic acid, pentanoic acid, hexanoic acid, cyanoacetic acid, malonic acid, glyoxylic acid, nitroacetic acid, phenylacetic acid, acetone dicarboxylic acid, α-oxoacetic acid, maleic acid and succinic acid.

6. A curable coating composition according to claim 1, wherein component (C) is selected from the group consisting of tricyclopentylphosphine, tricyclohexylphosphine, tri-n-octylphosphine, tri-n-dodecylphosphine, trivinylphosphine, tribenzylphosphine, dimethylphenylphosphine, cyclohexyldiphenylphosphine, dicyclohexylphenylphosphine, 1,2-bis(diphenylphosphino)ethane, 1,3-bis(diphenylphosphino)propane, 1,4-bis(diphenylphosphino)butane, triphenylphosphine, hexamethylene triaminophosphine and hexaethylene triaminophosphine.

7. A curable coating composition according to claim 1, wherein said coating composition can be cured in the temperature range of 0-200°C.

8. A curable coating composition according to claim 1, wherein said coating composition can be cured in the temperature range of 20-200°C and is storage stable at ambient temperature for more than 6 months.

9. A method for the preparation of a curable coating composition according to claims 1-8, wherein the components (A), (B), (C) and (D) are mixed in an arbitrary order with the proviso that component (C) is added after the addition of component (D) or
wherein a mixture of components (C) and (D) is mixed with components (A) and (B) in an arbitrary order.

10. A method of coating a substrate comprising the following steps:
(i) applying a curable coating composition according to claims 1-8 onto said substrate and
(ii) curing said coating composition.

11. A crosslinked coating obtained from the curable coating composition according to claims 1-8.

12. Substrates, containing at least one coating according to claim 11.
